# EUROPEAN PATENT APPLICATION

(11) **EP 4 614 773 A1**
(43) Date of publication of application: **10.09.2025**
(21) Application number: 24161784.4
(22) Date of filing: 06.03.2024
(51) Int. Cl.: H02K 3/24, H02K 9/19

(54) **E-MACHINE WITH LIQUID-COOLED STATOR WINDING SLOTS AND GAS VENT CHANNEL**

(71) Applicant: Garrett Transportation I Inc., Torrance, CA 90504 (US)
(72) Inventor: Slama, David, Brno (CZ); Petr, David, Brno (CZ); Mach, Zdenek, Brno (CZ)
(74) Representative: Ingrassia, Fisher & Lorenz UK Ltd.

(57) **Abstract**

An e-machine system includes a stator member and an e-machine housing, and at least one includes a vent channel that fluidly connects a first flow chamber and a second flow chamber on opposite axial ends of the stator member. The vent channel is configured to provide gas venting from the flow of liquid coolant through the e-machine housing and stator member.

## Description

### TECHNICAL FIELD

The technical field generally relates to an e-machine and, more particularly, relates to an e-machine with liquid-cooled stator winding slots and a gas vent channel.

### BACKGROUND

E-machines, such as electric motors, electric generators, and combination motor/generators, are provided for a variety of uses. For example, electric traction motors are proposed for electric vehicles, locomotives, and the like.

Some e-machine systems may generate heat during operation, may operate in high-temperature environments, etc. Elevated temperatures may hinder performance and/or cause other disadvantages. Thus, e-machine systems are proposed that include cooling features. However, providing such cooling features remains challenging. There may be detrimental increases in costs, part count, device complexity, size, bulkiness, and/or weight if these cooling features are included.

Furthermore, some systems may circulate liquid coolant proximate the e-machine to provide cooling. However, air and/or other gas may negatively affect cooling performance of the coolant system. Air/gas pockets or bubbles may limit or impede flow of the liquid coolant, thereby negatively affecting the cooling capacity of the coolant system.

Thus, there remains a need for an e-machine system that provides effective cooling. Also, there remains a need for an e-machine cooling system that provides a liquid coolant to the e-machine and that allows gas (e.g., air) to be vented from the coolant passages thereof. There remains a need for these e-machine systems, wherein the cooling features are provided in a relatively compact, low-weight package. There is also a need for such an e-machine system that also provides high manufacturing efficiency for reduced costs and manufacturing time. Other desirable features and characteristics will become apparent from the subsequent detailed description and the appended claims, taken in conjunction with the accompanying drawings and this background.

### BRIEF SUMMARY

In an example embodiment, an e-machine system is disclosed that includes a stator member having a longitudinal axis. The stator member includes a first axial end and a second axial end that are spaced apart along the longitudinal axis. The stator member includes a slot extending between the first axial end and the second axial end. The slot is configured to receive a stator winding segment and is configured to receive a flow of liquid coolant for cooling the stator winding segment. Furthermore, the e-machine system includes an e-machine housing that houses the stator member with a first flow chamber defined between the e-machine housing and the first axial end and with a second flow chamber defined between the e-machine housing and the second axial end. Moreover, the e-machine system includes a vent channel that extends along at least one of the stator member and the e-machine housing to fluidly connect the first flow chamber and the second flow chamber. The vent channel is configured to provide gas venting from the flow of liquid coolant.

In some embodiments, the stator member includes an outer radial area that extends along the longitudinal axis between the first axial end and the second axial end. The e-machine housing includes an inner radial area that faces the outer radial area at a stator-housing radial interface. The vent channel extends along the stator-housing radial interface and fluidly connects the first flow chamber and the second flow chamber.

In some embodiments, the vent channel has a straight axis that is substantially parallel to the axis.

Also, in some embodiments, the vent channel is at least partly defined by a groove recessed radially outward into the inner radial area of the e-machine housing.

Furthermore, in some embodiments, the vent channel is at least partly defined by a groove recessed radially inward into the outer radial area of the stator member.

Additionally, in some embodiments, the vent channel is at least partly defined by an internal passage extending along the longitudinal axis through the e-machine housing.

Moreover, in some embodiments, the longitudinal axis defines a first side of the e-machine and a second side of the e-machine. The first side and the second side are spaced apart circumferentially on opposite sides of the longitudinal axis. The e-machine system includes an inlet through the e-machine housing to the first flow chamber and an outlet from the second flow chamber through the e-machine housing. The inlet is disposed on the first side and the outlet is disposed on the second side.

Also, in some embodiments, the second side is configured to be disposed above the first side with respect to a direction of gravity.

Furthermore, in some embodiments, the e-machine system includes a one-way valve at the outlet. The one-way valve is biased toward a closed position and configured to move to an open position for the flow of the liquid coolant.

Additionally, in some embodiments, the stator member is interference fit within the e-machine housing.

Moreover, in some embodiments, the stator member includes a plurality of laminations that are stacked along the longitudinal axis.

A method of manufacturing the e-machine system is also disclosed.

In some embodiments, the method of manufacturing includes attaching, by interference fit, the stator member within the e-machine housing.

### BRIEF DESCRIPTION OF DRAWINGS

The various embodiments will hereinafter be described in conjunction with the following drawing figures, wherein like numerals denote like elements, and wherein:
FIG. 1 is a schematic illustration of an e-machine system according to example embodiments of the present disclosure;
FIG. 2 is an isometric longitudinal cross-sectional view of a stator member and housing of the e-machine system according to example embodiments;
FIG. 3 is an axial cross-sectional view of the stator member and housing of the e-machine system of FIG. 2;
FIG. 4 is an axial cross-sectional view of a portion of the stator member and housing of FIG. 3 and including a vent channel according to example embodiments;
FIG. 5 is an axial cross-sectional view of a portion of the stator member, housing, and vent channel according to additional example embodiments;
FIG. 6 is a axial cross-sectional view of a portion of the stator member, housing, and vent channel according to additional example embodiments; and
FIG. 7 is an axial cross-sectional view of a portion of the stator member, housing, and vent channel according to additional example embodiments.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Broadly, example embodiments disclosed herein include an e-machine, such as an electric motor, with a stator member that is housed within an e-machine housing. The stator member may include a core (i.e., core member) that supports stator windings. The core may include one or more slots that extend longitudinally and that receive stator windings. The slots may also define respective flow passages for liquid fluid coolant to flow between the first axial end and the second axial end of the stator member. The liquid may flow along and cool the stator windings and surrounding areas. Furthermore, the e-machine may include a vent channel that extend longitudinally along at least one of the stator member and the housing to fluidly connect chambers at the first axial end and the second axial end of the stator member. Accordingly, the vent channel may provide venting for gas (e.g., air) within the housing. The gas may be vented from the e-machine. As such, the liquid coolant (e.g., coolant oil) may cool the stator and the e-machine more effectively and efficiently. Also, these features may be provided in a compact, lightweight package that is simple to manufacture and assemble.

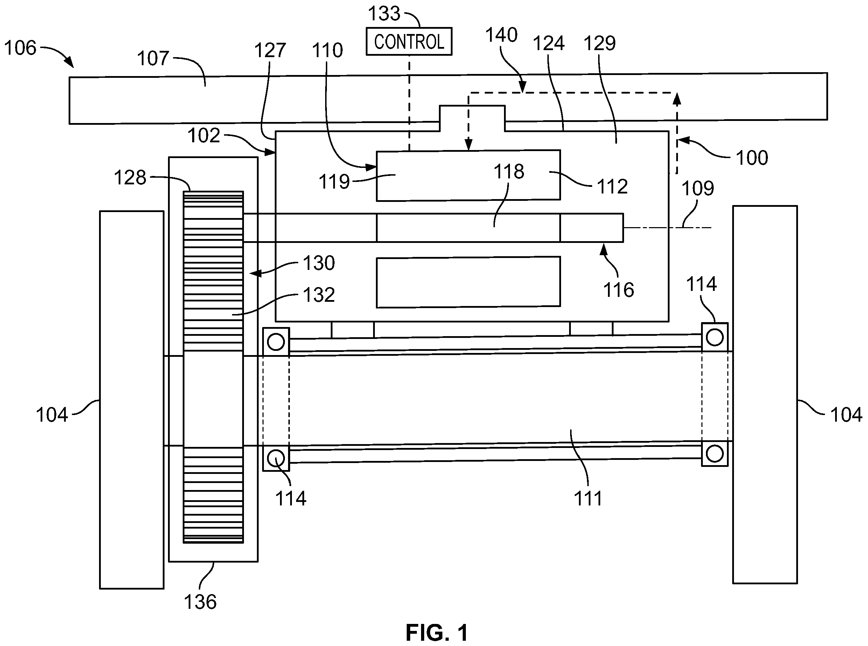

FIG. 1 is a schematic view of an e-machine system 100 according to example embodiments of the present disclosure. The e-machine system 100 may have a variety of configurations. In some embodiments, the e-machine system 100 may be configured as a traction drive system 102 that is included, for example, on a vehicle 106. Thus, the traction drive system 102 may be configured for driving one or more wheels 104 of the vehicle 106. More specifically, the wheels 104 may be included at opposite ends of an axle 111, and a chassis 107 may be supported on the wheels 104 by a suspension system (not shown). The vehicle 106 may be an electric car, truck, van, motorcycle, boat, or other vehicle. However, it will be appreciated that the e-machine system 100 may be configured otherwise without departing from the scope of the present disclosure.

Generally, the e-machine system 100 may include an e-machine 110, such as an electric motor 112. The motor 112 may be housed within a cavity 129 of an e-machine housing 124. It will be appreciated that the e-machine 110 may be configured otherwise. The e-machine 110 may be configured as an electric generator in some embodiments. Furthermore, the e-machine 110 may be operable in some modes as a motor and in additional modes as a generator. The e-machine 110 may include a rotor member 118 and a stator member 119 that are housed within the cavity 129 of the e-machine housing 124.

The rotor member 118 may be supported on a shaft 116, and the shaft 116 may be supported for rotation about an axis 109 (i.e., rotation axis 109) within the e-machine housing 124. The stator member 119 of the e-machine 110 may be fixed within the e-machine housing 124 and may surround the rotor member 118 and the shaft 116. In embodiments in which the e-machine 110 is an electric motor 112, the shaft 116 may be referred to as an output shaft 116 of the electric motor 112. In some embodiments, a gear connection member 128 (e.g., a gear, a spline on the shaft 116, or other part with gear teeth features) may be operably supported on the shaft 116.

Also, the e-machine system 100 may include a transmission 130. The transmission 130 may generally include a geartrain 132 that is housed within a gearbox housing 136 of the housing 125. The gearbox housing 136 may be attached (e.g., fixed) to a side wall 127 of the e-machine housing 124.

The geartrain 132 may be of any suitable type. The geartrain 132 may operatively connect the e-machine 110 and the axle 111 and may transmit power therebetween. The e-machine 110 may be coupled to the wheels 104 via the transmission 130. The geartrain 132 may be attached to the gear connection member 128 and to the axle 111. The gearbox housing 136 and the e-machine housing 124 may be moveably supported on the axle 111 by one or more bearings 114 (e.g., a bearing sleeve, suspension tube, etc.) such that the axle 111 may rotate relative thereto.

During operation, the electric motor 112 may rotatably drive the shaft 116 and the gear connection member 128 supported thereon. This rotational power may transfer to the geartrain 132, which may transmit the power to the axle 111 to rotate the wheels 104 and propel the vehicle 106. These operations may be controlled by a control system 133. The control system 133 may control speed of the motor 112 and/or other functions of the motor 112.

Furthermore, the e-machine system 100 may include a fluid coolant system 140. The fluid coolant system 140 may be configured for circulating a fluid, such as a liquid fluid coolant (e.g., coolant oil). The fluid coolant system 140 may be coupled to the stator member 119 as will be discussed. Accordingly, the fluid coolant system 140 and the stator member 119 may include features that provide cooling to the stator member 119. This may, in turn, provide cooling to the rotor member 118, to bearings, and/or to other adjacent areas of the e-machine 110.

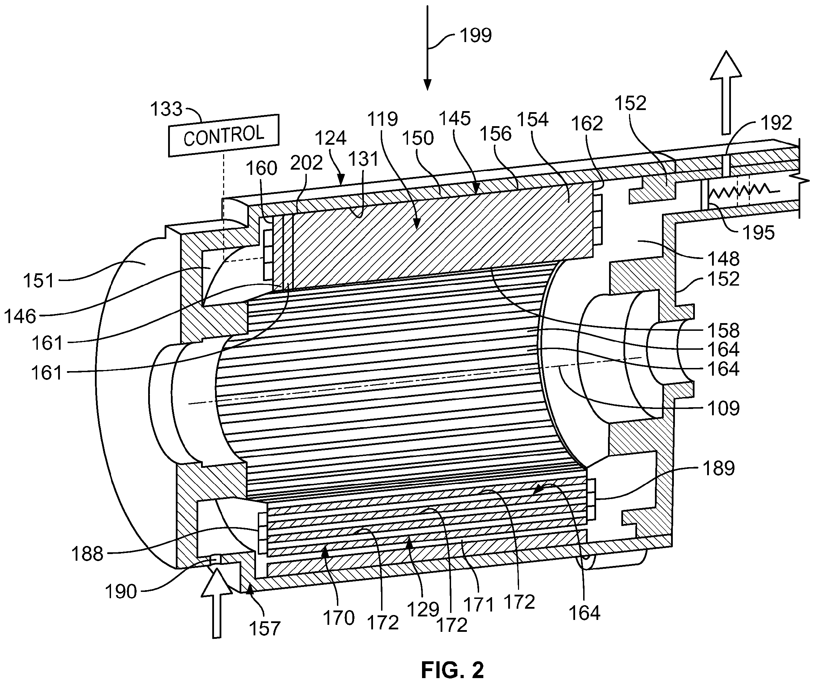

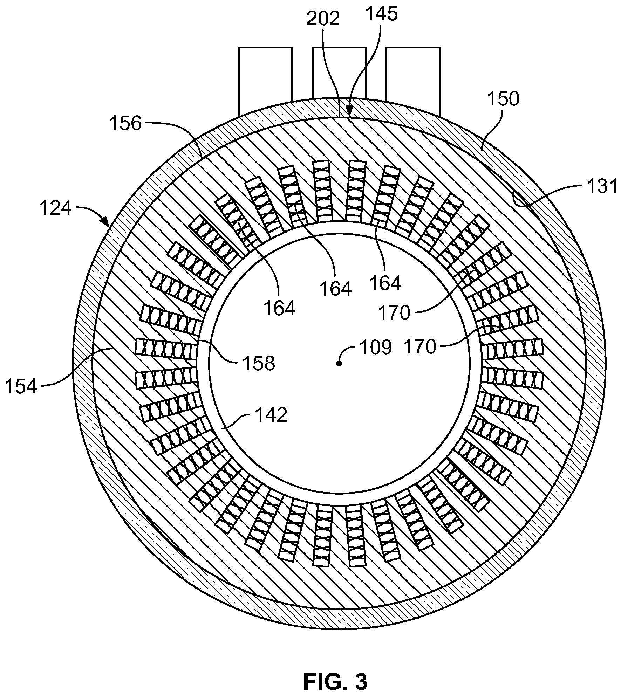

As represented in FIGS. 2 and 3, the e-machine housing 124 may be cylindrical and hollow. The e-machine housing 124 may include an outer radial wall 150, a first axial wall 151, and a second axial wall 152. The outer radial wall 150 may extend in a circumferential direction about the axis of rotation 109 and may extend longitudinally between the first axial wall 151 and the second axial wall 152. The outer radial wall 150 may also define an inner radial surface 131 that faces radially inward toward the axis 109. The first axial wall 151 and second axial wall 152 may be somewhat disc-like and may extend transverse to the axis 109. In some embodiments, the outer radial wall 150 and first axial wall 151 may be integrally connected as a one-piece and unitary outer housing 157. The second axial wall 152 may be removably attached to the outer housing 157 on the open end of the outer radial wall 150. The outer radial wall 150, first axial wall 151, and second axial wall 152 may collectively define the cavity 129. The cavity 129 may be substantially cylindrical and may be centered on the axis 109. Seal members may be included for sealing off the cavity 129. For example, O-rings may be included between the second axial wall 152 and the outer radial wall 150 to thereby substantially seal the cavity 129.

The stator member 119 may include a stator core 154. The stator core 154 may be hollow and cylindrical so as to include an outer radial surface 156, an inner radial surface 158, a first axial end 160, and a second axial end 162. The stator core 154 may comprise a plurality of disc-like laminations (two of which are indicated, for example, at 161 in FIG. 2). The laminations 161 may be stacked together and arranged along the axis 109 to collectively define the outer radial surface 156 and the inner radial surface 158. The laminations 161 may reduce magnetic losses, eddy currents, increase manufacturing efficiency, etc.

As shown in FIGS. 2 and 3, the stator core 154 may include a plurality of slots 164 (i.e., grooves, passages, etc.). It will be appreciated that the laminations 161 of the stator core 154 may individually include notches that, when stacked together, collectively define the slots 164. The plurality of slots 164 may be disposed in spaced arrangement (e.g., equally spaced) about the axis of rotation 109 and may radiate from the axis of rotation 109. The slots 164 may have a rectangular cross section (FIG. 3) in some embodiments; however, the cross section may have a different shapes/profiles without departing from the scope of the present disclosure. The slots 164 may extend continuously from the first axial end 160 to the second axial end 162 (FIG. 2). Accordingly, the slots 164 may be open at the first axial end 160 and the second axial end 162 as represented in FIG. 2. Furthermore, the slots 164 may be open at the inner radial surface 158 of the stator core 154.

The stator member 119 may also include an inner radial member 142 (FIG. 3). The inner radial member 142 may be a cylinder (e.g., a right circular cylinder) that is centered about the axis 109 and that is received within the stator core 154. The inner radial member 142 may extend circumferentially about the axis 109 and may close off and cover over the slots 164 at the inner radial surface 158.

The stator member 119 may further include a plurality of windings 170 (i.e., conductive members, winding members, wiring members, etc.). The windings 170 may be electrically conductive and may comprise a plurality of elongate segments, wires, lines, etc. The windings 170 may be arranged in a plurality of coils, wraps, or any known arrangement that extend back- and-forth between first and second axial ends 160, 162 of the stator core 154 and between different ones of the slots 164. Accordingly, the windings 170 may be arranged for operatively coupling to the rotor member 118 of the motor 112. In other words, the term "windings 170" is used generally and may interpreted broadly to encompass a number of arrangements of conductive lines that extend throughout the core 154.

Accordingly, the windings 170 may include a plurality of longitudinal segments 172 that are received in the slots 164 of the stator core 154 and that extend generally along the axis 165 of the respective slot 164. It will be appreciated that there may be any number of longitudinal segments 172 in the slots 164. It will also be appreciated that the cross sectional shape/profile of the longitudinal segments 172 shown in FIGS. 3-6 are example embodiments. The shape/profile of the segments 172 may be rounded, rectangular, polygonal, a shape with at least one flat side, or otherwise shaped. Also, the segments 172 may be arranged in a variety of arrangements within the slot 164, some of which are represented in FIGS. 3-6.

As shown in FIG. 2, the windings 170 may also include a plurality of first end members 188 that are proximate the first axial end 160 of the stator core 154. The first end members 188 may project axially (along the axis 109) from the stator core 154 at the first axial end 160. The windings 170 may further include a plurality of second end members 189 that are proximate the second axial end 162 of the stator core 154. The second end members 189 may project axially (along the axis 109) from the stator core 154 at the second axial end 162. The first end members 188 may connect respective pairs of longitudinal segments 172 in different slots 164, and the first end members 188 may be disposed outside the stator core 154 on the first axial end 160. In some embodiments, at least one of the first end members 188 may extend away from the first axial end 160 to electrically connect to the control system 133. Furthermore, the second end members 189 may connect respective pairs of the longitudinal segments 172 in different slots 164. The second end members 189 may be disposed outside the stator core 154 at the second axial end 162. The first and second end members 188, 189 may electrically connect ones of the longitudinal segments 172 in a known manner for operation of the stator member 119 and for operative connection to the control system 133.

The e-machine housing 124 may house the stator member 119 with the inner radial surface 131 of the outer radial wall 150 abutting against the outer radial surface 156 of the stator core 154. Also, the first axial wall 151 may cover over the first axial end 160 of the stator core 154, and the second axial wall 152 may cover over the second axial end 162. Thus, the outer radial area of the stator member 119 (including the outer radial surface 156) and the inner radial area of the e-machine housing 124 (including the inner radial surface 131) may engage and fit together at a stator-housing interface 145. In some embodiments, the outer radial surface 156 of the stator member 119 may be press-fit, interference-fit, or friction-fit within the outer radial wall 150 of the e-machine housing 124 to define stator-housing interface 145. Accordingly, manufacturing and assembly may be highly efficient.

Also, a first flow chamber 146 may be defined axially between the first axial wall 151 and the first axial end 160 of the stator member 119. The first flow chamber 146 may be annular and may extend circumferentially about the axis 109. Likewise, a second flow chamber 148 may be defined axially between the second axial wall 152 and the second axial end 162 of the stator member 119. The second flow chamber 148 may be annular and may extend circumferentially about the axis 109. The first flow chamber 146 may be fluidly connected to the slots 164. Also, the second flow chamber 148 may be fluidly connected to the slots 164.

The e-machine 110 may be operatively connected (i.e., fluidly connected) within the fluid coolant system 140 (FIG. 1). There may a pump for circulating liquid coolant through the e-machine 110 and directly over the windings 170 of the stator member 119, and the pump may be upstream or downstream of the e-machine housing 124.

The e-machine housing 124 may include an inlet 190 (i.e., a fluid inlet) extending therethrough, and the inlet 190 may be connected to the fluid coolant system 140. In some embodiments, the inlet 190 may be directed normal to the axis 109 and into the first flow chamber 146. Also, the e-machine housing 124 may include an outlet 192 (i.e., a fluid outlet) that extends therethrough and that is connected to the fluid coolant system 140. In some embodiments, the outlet 192 may be directed normal to the axis 109 and out from the second flow chamber 148. Thus, the first flow chamber 146 may be referred to as an inlet manifold chamber that receives fluid coolant from the inlet 190 and distributes the fluid coolant to the plurality of slots 164. The coolant may flow along the slots 164 to cool the windings 170. The second flow chamber 148 may be referred to as an outlet manifold chamber that receives fluid coolant from the slots 164 and directs the coolant to the outlet 192.

In some embodiments, the inlet 190 may be disposed on an opposite angular side of the axis 109 from the outlet 192. The inlet 190 may be spaced angularly about the axis 109, for example, approximately one hundred eighty degrees (180°) apart from the outlet 192. The spacing of the inlet 190 from the outlet 192 may be arranged according to the direction of gravity (indicated by arrow 199) in FIG. 2 according to example embodiments of the present disclosure. As shown, the inlet 190 may be disposed on a bottom side of the axis 109, and the outlet 192 may be disposed on the opposite top side of the axis 109 with regard to the direction of gravity 199. Accordingly, flow from the inlet 190 to the outlet 192 may be generally against the force of gravity.

Additionally, in some embodiments, the e-machine 110 may include a valve member 195. The valve member 195 may be a one-way valve supported at the outlet 192. The valve member 195 may be supported for movement within the outlet 192 between a closed position (shown in solid lines in FIG. 2) and an open position (shown in phantom lines in FIG. 2). The valve member 195 may be biased toward the closed position (e.g., by a biasing member such as a spring, etc.) to block flow from the outlet 192. At a predetermined pressure of the coolant, the valve member 195 may move open against the biasing force supplied by the biasing member to allow flow out of the outlet 192.

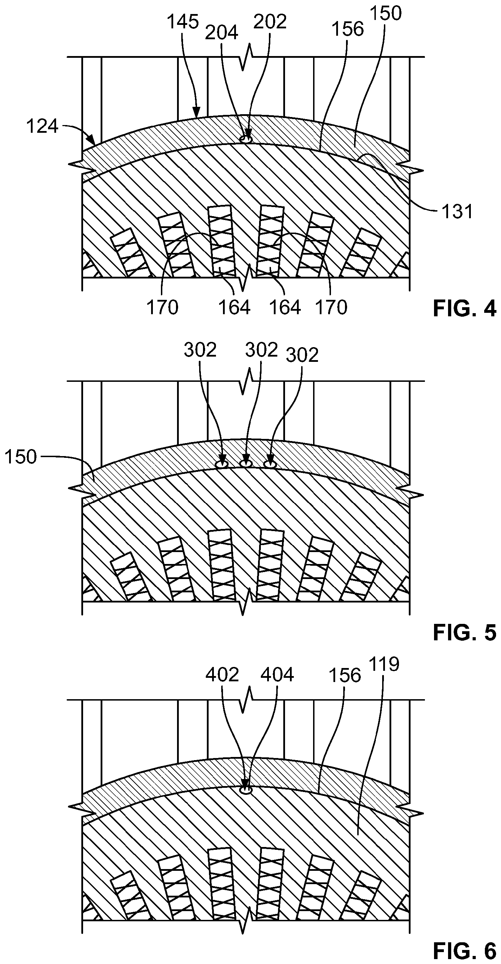

Moreover, as shown in FIG. 4, the e-machine 110 may include a vent channel 202. The vent channel 202 may extend along the stator-housing radial interface 145. The vent channel 202 may be at least partly defined by a groove 204 that is recessed radially outward into the inner radial surface 131 of the outer radial wall 150. The groove 204 may have a straight axis that is substantially parallel to the axis 109 and may extend continuously from the first axial end 160 to the second axial end 162. The groove 204 may have a rounded (e.g., circular, ovate, etc.) cross section taken normal to the axis 109 as shown in FIG. 4. Furthermore, the groove 204 may oppose a smooth and continuous area of the outer radial surface 156 such that the groove 204 and the smooth, continuous outer radial surface 156 cooperatively define the vent channel 202. Accordingly, the vent channel 202 may be provided inexpensively with manufacturing efficiency.

The vent channel 202 may extend between and fluidly connect the first flow chamber 146 and the second flow chamber 148. As such, the vent channel 202 may provide gas venting and may direct gas (air) from the flow of liquid coolant through the e-machine 110. For example, during operation, liquid coolant may flow from the inlet 190, through the slots 164 and out the outlet 192, thereby cooling the windings 170. The valve member 195 may limit flow, for example, remaining closed until the liquid coolant substantially fills the slots 164, the first flow chamber 146, and the second flow chamber 148. Once filled, the coolant pressure may reach a predetermined threshold, and the valve member 195 may open to allow circulating flow of the liquid coolant.

If there is gas (air) within the cavity 129 and/or within the stator member 119, the gas may vent via the vent channel 202. The vent channel 202 is separated and spaced away from the windings 170. Thus, liquid may flow across the windings 170 for effective cooling, and air or other gas may be routed away from the windings 170. For example, gas may flow from the first flow chamber 146, along the vent channel 202, to the second flow chamber 148, and out of the e-machine 110 via the outlet 192.

In additional embodiments illustrated in FIG. 5, the e-machine may include a plurality of vent channels 302. There may be two or more (e.g., three) vent channels 302 defined in the outer radial wall 150. The vent channels 302 may be spaced apart slightly in the circumferential direction.

In further embodiments illustrated in FIG. 6, the e-machine may include a vent channel 402 that is defined by a groove 404 recessed radially inward into the outer radial surface 156 of the stator member 119. In some embodiments, including the vent channel 402 on the outer radial surface 156 of the stator member 119 may provide manufacturing efficiencies.

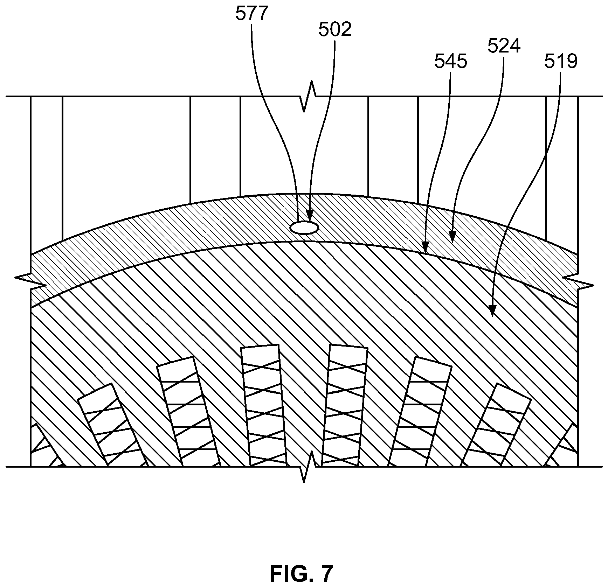

Moreover, in embodiments illustrated in FIG. 7, the e-machine may include a vent channel 502 that is defined by an internal passage 577 of the e-machine housing 524. The internal passage 577 may have an ovate cross-section. The internal passage 577 may be spaced outward radially from the stator-housing radial interface 545. The axial ends of the passage 577 may fluidly connect to the flow channels on both ends of the stator member 519.

Therefore, the vent channel 202, 302, 402, 502 of the present disclosure may provide venting for gas (e.g., air) within the cavity 129. As such, liquid coolant (e.g., coolant oil) may cool the stator member 119, the windings 170, etc. effectively and efficiently. Any air or other gas is unlikely to affect performance. Also, these features may be provided in a compact, lightweight package that is simple to manufacture and assemble.

It will be appreciated that the number of vent channels 202, 302, 402, 502, the position of the vent channels 202, 302, 402, 502, and/or other features thereof may vary from the embodiments discussed herein. Also, the inlet and outlet positions (e.g., circumferential positions relative to the longitudinal axis) may vary from the embodiments discussed herein.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It is understood that various changes may be made in the function and arrangement of elements described in an exemplary embodiment without departing from the scope of the disclosure as set forth in the appended claims.

## Claims

1. An e-machine system comprising:
a stator member having a longitudinal axis, the stator member including a first axial end and a second axial end that are spaced apart along the longitudinal axis, the stator member including a slot extending between the first axial end and the second axial end, the slot configured to receive a stator winding segment and configured to receive a flow of liquid coolant for cooling the stator winding segment;
an e-machine housing that houses the stator member with a first flow chamber defined between the e-machine housing and the first axial end and with a second flow chamber defined between the e-machine housing and the second axial end; and
a vent channel that extends along at least one of the stator member and the e-machine housing along the longitudinal axis to fluidly connect the first flow chamber and the second flow chamber, the vent channel configured to provide gas venting from the flow of liquid coolant.

2. The e-machine system of claim 1, wherein the stator member includes an outer radial area that extends along the longitudinal axis between the first axial end and the second axial end;
wherein the e-machine housing includes an inner radial area that faces the outer radial area at a stator-housing radial interface; and
wherein the vent channel extends along the stator-housing radial interface and fluidly connects the first flow chamber and the second flow chamber.

3. The e-machine system of any preceding claim, wherein the vent channel has a straight axis that is substantially parallel to the longitudinal axis.

4. The e-machine system of any preceding claim, wherein the vent channel is at least partly defined by a groove recessed radially outward into the inner radial area of the e-machine housing.

5. The e-machine system of any of claims 1-3, wherein the vent channel is at least partly defined by a groove recessed radially inward into the outer radial area of the stator member.

6. The e-machine system of any of claims 1-3, wherein the vent channel is at least partly defined by an internal passage extending along the longitudinal axis through the e-machine housing.

7. The e-machine system of any preceding claim, wherein the longitudinal axis defines a first side of the e-machine and a second side of the e-machine, the first side and the second side spaced apart circumferentially on opposite sides of the longitudinal axis; and
further comprising an inlet through the e-machine housing to the first flow chamber and an outlet from the second flow chamber through the e-machine housing, the inlet disposed on the first side and the outlet disposed on the second side.

8. The e-machine system of claim 7, wherein the second side is configured to be disposed above the first side with respect to a direction of gravity.

9. The e-machine system of claim 7 or 8, further comprising a one-way valve at the outlet, the one-way valve biased toward a closed position and configured to move to an open position for the flow of the liquid coolant.

10. The e-machine system of any preceding claim, wherein the stator member is interference fit within the e-machine housing.

11. The e-machine system of any preceding claim, wherein the stator member comprises a plurality of laminations that are stacked along the longitudinal axis.

12. A method of manufacturing the e-machine system of any preceding claim.

13. The method of manufacturing the e-machine system of claim 12, further comprising attaching, by interference fit, the stator member within the e-machine housing.
